# EUROPEAN PATENT SPECIFICATION

(11) **EP 2 167 724 B1**
(45) Date of publication and mention of the grant of the patent: **12.09.2012**
(21) Application number: 08775954.4
(22) Date of filing: 16.07.2008
(51) Int. Cl.: D06M 10/02, D06M 14/20, D06M 14/22, D06M 14/24, D06M 14/26, D06M 14/28, D06M 14/30, D06M 14/32, D06M 14/34, D06M 14/36, A43B 7/12, A43B 23/06

(54) **METHOD FOR LIQUID PROOFING AN ITEM OF FOOTWEAR BY PLASMA GRAFT POLYMERISATION**
VERFAHREN ZUR FLÜSSIGKEITSDICHTMACHUNG EINES SCHUHWERKS DURCH PLASMAPFROPFPOLYMERISATION
PROCÉDÉ DE PROTECTION D'ARTICLES CHAUSSANT CONTRE LES LIQUIDES PAR POLYMÉRISATION GREFFEE A L'AIDE D'UN PLASMA

(30) Priority: 17.07.2007 GB 0713827; 30.10.2007 GB 0721205
(43) Date of publication of application: 31.03.2010
(73) Proprietor: P2I LTD, Abingdon, Oxfordshire OX14 4SA (GB)
(72) Inventor: COULSON, Stephen, Oxfordshire OX14 5FP (GB)
(74) Representative: Leland, Emma Clare
(86) International application number: PCT/GB2008/002416
(87) International publication number: WO 2009/010741

(56) References cited:
- EP-A- 1 557 489
- WO-A-2005/089961
- WO-A-2007/083124
- US-A- 5 622 773

## Description

The present invention relates to a method for protecting an item, especially an item of clothing or footwear, from weight gain due to uptake of liquid. In particular, the invention relates to a method for protecting an item, especially an item of clothing or footwear, from weight gain due to uptake of liquid comprising exposing said item to plasma in a gaseous state for a sufficient period of time to allow a polymeric layer to form on the surface of the item.

Liquid repellent chemicals that can be applied to fabric rolls, including materials such as synthetic polymers, for example polypropylene, polyester and nylon, natural fibres, for example cotton, cellulose and leather have been produced by companies such as Dupont, Clariant, 3M, Asahi, and Daikin. These techniques have provided materials with very good levels of both oil and water resistance, in addition to being able to minimise staining. These treatments are often referred to as a durable water repellent (DWR).

When products such as garments and footwear are constructed to provide a degree of liquid resistance or to become waterproof, it is likely that one of the major components used is a material that has been rendered water resistant by using a DWR. In addition these DWR finishes can be provided to wide number of products such as tents, umbrellas, sleeping bags, awnings and a variety of other out-door or protective materials giving a good level of overall liquid protection.

Other approaches to imparting liquid resistance which have been investigated include wash-in post-construction processes and the use of spray on formulations.

Although fabric rolls can be treated in the manner described above to give high levels of water repellency, these materials must then be constructed into products. In the case of products such as a garment or footwear, other components such as seams, fasteners, laces, zips, soles, linings, footbeds and so on are required. These additional components may not themselves be inherently liquid resistant or it may be difficult to render them liquid resistant due to such factors as unfavourable solution energetics or physical incompatability with the process. Moreover, the processes involved in constructing the product, such as stitching, will themselves create further areas in the product which will not provide the level of protection required by the end user. Ingress of water through the seams of footwear or garments, for example, will render the product unacceptable to the wearer.

Taking footwear as an example, shoes are often designed in a manner where conventional DWRs could not be applied to give a good level of protection due to a wide variety of design aspects such as holes required in the materials for aesthetic or airflow requirements, or the choice of materials and bonding technologies. A further problem, and often more important, is the increased uptake of water of the whole shoe which can lead to a significant increase in weight, especially in wet conditions. The wearer therefore has to expend more energy carrying around the substantial extra weight of water now present both in the shoe and absorbed onto the materials. This can also occur when physical barriers such as membranes, like those under the trade marks Sympatex, Gore-tex and event, which may or may not have a DWR applied to the upper material that covers the membrane are used. Here, water can penetrate and can build up between the outer, upper fabric and the membrane and therefore increase the weight.

Footwear or garments using membranes to claim the highest level of 'water-proofness' will always consist of an outer fabric with a DWR that is stitched or attached in some form to the rest of the shoe or garment and very much rely on this to maintain breathability and comfort. Despite the fact the integrity of the membrane may prevent ingress of water into the foot cavity or inside a garment,water penetration of this outer can occur leading to substantial weight increase.

The effectiveness of wash-in and spray-on processes will vary from one product to another depending on the materials used. Difficulties can also arise in achieving complete coverage of the item, as only a small section left un-protected can lead to copious liquid ingress, thereby undermining the protection achievable.

There therefore remains a continuing need for improved methods of providing treatments for items such as footwear and garments which provide adequate liquid-proofing protection but which also avoid weight gain from uptake of liquid, thereby reducing the burden on the wearer.

Plasma deposition techniques have been quite widely used for the deposition of polymeric coatings onto a range of surfaces, and in particular onto fabric surfaces. This technique is recognised as being a clean, dry technique that generates little waste compared to conventional wet chemical methods. Using this method, plasmas are generated from organic molecules, which are subjected to an electrical field. When this is done in the presence of a substrate, the radicals of the compound in the plasma polymerise onto the substrate. Conventional polymer synthesis tends to produce structures containing repeat units that bear a strong resemblance to the monomer species, whereas a polymer network generated using a plasma can be extremely complex. The properties of the resultant coating can depend upon the nature of the substrate as well as the nature of the monomer used and conditions under which it is deposited.

The provision of water repellent coatings by plasma polymerisation is disclosed in W02005/089961 which describes use of a pulsed field and EP1557489 which describes particular halopolymer coatings.

US5622773 discloses the treatment of antiballistically effective materials in a plasma of hydrophobically acting organic gases.

WO 2007/083124 relates to treatment of an item of fashion clothing, a clothing accessory or a household textile by plasma polymerisation to protect it from contamination from liquids.

The present inventors have found that by using plasma enhancement technology, not only can a high degree of liquid-proofing protection be achieved but also a significant reduction in water uptake by the complete item is demonstrated by the plasma enhanced item compared to its untreated counterpart. The gaseous phase allows full penetration of complex three dimensional end products and the ionization allows attachment of liquid repellent functional groups to all components of the product, independent of the material from which the component is constructed. This results in molecularly tailored products with minimal water up-take and hence less weight for the wearer to 'carry' around leading to lower energy expenditure.

Accordingly, the present invention provides a method for protecting an item of footwear from weight gain due to uptake of liquid comprising exposing said complete item including fasteners to plasma in a gaseous state for a sufficient period of time to allow a protective layer to be created on the surface of the item.
As used herein, the expression "in a gaseous state" refers to gases or vapours, either alone or in mixture, as well as aerosols.

The expression "protective layer" refers to a layer, especially a polymeric layer, which provide some protection against liquid damage, and in particular are liquid (such as oil- and water-) repellent. Sources of liquids from which the items are protected include environmental liquids such as water, and in particular rain, as well as any other oil or liquid, which may be accidentally spilled.

The method according to the invention may suitably be applied to an item of footwear or a garment, particularly to an item or footwear or a garment for use in sporting activities, such as running shoes or trainers.

Any monomeric compound or gas which undergoes plasma polymerisation to form a water-repellent polymeric coating layer on the surface of the item may suitably be used. Suitable monomers which may be used include those known in the art to be capable of producing water-repellent polymeric coatings on substrates by plasma polymerisation including, for example, carbonaceous compounds having reactive functional groups, particularly substantially -CF₃ dominated perfluoro compounds (see WO 97/38801) , perfluorinated alkenes (Wang et al., Chem Mater 1996, 2212-2214) , hydrogen containing unsaturated compounds optionally containing halogen atoms or perhalogenated organic compounds of at least 10 carbon atoms ( see WO 98/58117), organic compounds comprising two double bonds (WO 99/64662), saturated organic compounds having an optionally substituted alky chain of at least 5 carbon atoms optionally interposed with a heteroatom (WO 00/05000), optionally substituted alkynes (WO 00/20130), polyether substituted alkenes (US 6,482,531B) and macrocycles containing at least one heteroatom (US 6,329,024B).

Preferably, the item is provided with a polymeric coating formed by exposing the item to plasma comprising a compound of formula (I) 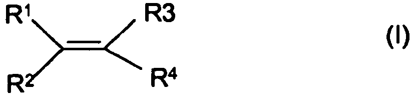 where R¹, R² and R³ are independently selected from hydrogen, alkyl, haloalkyl or aryl optionally substituted by halo; andR⁴ is a group X-R⁵ where R⁵ is an alkyl or haloalkyl group and X is a bond; a group of formula -C(O)O-, -C(O)O(CH₂)ₙY- where n is an integer of from 1 to 10 and Y is a bond or a sulphonamide group; or a group -(O)ₚR⁶(O)_{q}(CH₂)ₜ- where R⁶ is aryl optionally substituted by halo, p is 0 or 1, q is 0 or 1 and t is 0 or an integer of from 1 to 10, provided that where q is 1, t is other than 0., for a sufficient period of time to allow a protective polymeric layer to form on the surface of the item.

Suitable haloalkyl groups for R¹, R², R³ and R⁵ are fluoroalkyl groups. The alkyl chains may be straight or branched and may include cyclic moieties.

For R⁵, the alkyl chains suitably comprise 2 or more carbon atoms, suitably from 2-20 carbon atoms and preferably from 6 to 12 carbon atoms.

For R¹, R² and R³, alkyl chains are generally preferred to have from 1 to 6 carbon atoms.

Preferably R⁵ is a haloalkyl, and more preferably a perhaloalkyl group, particularly a perfluoroalkyl group of formula CₘF₂ₘ₊₁ where m is an integer of 1 or more, suitably from 1-20, and preferably from 4-12 such as 4, 6 or 8.

Suitable alkyl groups for R¹, R² and R³ have from 1 to 6 carbon atoms.

In one embodiment, at least one of R¹, R² and R³ is hydrogen. In a particular embodiment R¹, R², R³ are all hydrogen. In yet a further embodiment however R³ is an alkyl group such as methyl or propyl.

Where X is a group -C(O)O- -C(O)O(CH₂)ₙY-, n is an integer which provides a suitable spacer group. In particular, n is from 1 to 5, preferably about 2.

Suitable sulphonamide groups for Y include those of formula - N(R⁷)SO₂⁻ where R⁷ is hydrogen or alkyl such as C₁₋₄alkyl, in particular methyl or ethyl.

In one embodiment, the compound of formula (I) is a compound of formula (II)

CH₂=CH-R⁵ (II)

where R⁵ is as defined above in relation to formula (I).

In compounds of formula (II), X in formula (I) is a bond.

However in a preferred embodiment, the compound of formula (I) is an acrylate of formula (III)

CH₂=CR⁷C (O) O (CH₂) ₙR⁵ (III)

where n and R⁵ as defined above in relation to formula (I) and R⁷ is hydrogen, C₁₋₁₀ alkyl, or C₁₋₁₀haloalkyl. In particular R⁷ is hydrogen or C₁₋₆alkyl such as methyl. A particular example of a compound of formula (III) is a compound of formula (IV) 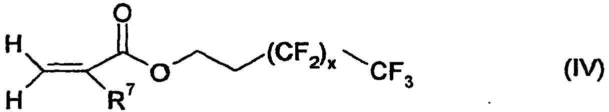 where R⁷ is as defined above, and in particular is hydrogen and x is an integer of from 1 to 9, for instance from 4 to 9, and preferably 7. In that case, the compound of formula (IV) is 1H,1H,2H,2H-heptadecafluorodecylacylate.

Alternatively, a polymeric coating may be formed by exposing the item to plasma comprising one or more organic monomeric compounds, at least one of which comprises two carbon-carbon double bonds for a sufficient period of time to allow a polymeric layer to form on the surface.

Suitably the compound with more than one double bond comprises a compound of formula (V) 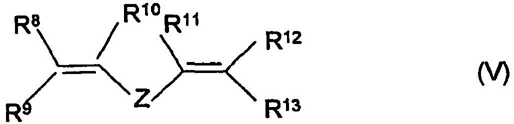 where R⁸, R⁹, R¹⁰, R¹¹, R¹², and R¹³ are all independently selected from hydrogen, halo, alkyl, haloalkyl or aryl optionally substituted by halo; and Z is a bridging group.

Examples of suitable bridging groups Z for use in the compound of formula (V) are those known in the polymer art. In particular they include optionally substituted alkyl groups which may be interposed with oxygen atoms. Suitable optional substituents for bridging groups Z include perhaloalkyl groups, in particular perfluoroalkyl groups.

In a particularly preferred embodiment, the bridging group Z includes one or more acyloxy or ester groups. In particular, the bridging group of formula Z is a group of sub-formula (VI) 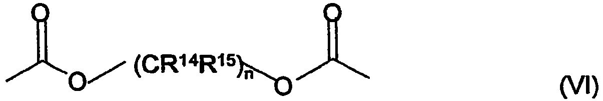 where n is an integer of from 1 to 10, suitably from 1 to 3, each R¹⁴ and R¹⁵ is independently selected from hydrogen, alkyl or haloalkyl.

Suitably R⁸, R⁹, R¹⁰, R¹¹, R¹², and R¹³ are haloalkyl such as fluoroalkyl, or hydrogen. In particular they are all hydrogen.

Suitably the compound of formula (V) contains at least one haloalkyl group, preferably a perhaloalkyl group.

Particular examples of compounds of formula (V) include the following: 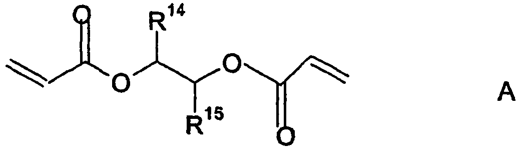 wherein R¹⁴ and R¹⁵ are as defined above, provided that at least one of R¹⁴ or R¹⁵ is other than hydrogen. A particular example of such a compound is a compound of formula B.

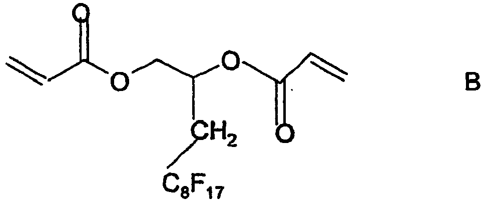

In a further aspect, the polymeric coating is formed by exposing the item to plasma comprising a monomeric saturated organic compound, said compound comprising an optionally substituted alkyl chain of at least 5 carbon atoms optionally interposed with a heteroatom for a sufficient period of time to allow a polymeric layer to form on the surface.

The term "saturated" as used herein means that the monomer does not contain multiple bonds (i.e. double or triple bonds) between two carbon atoms which are not part of an aromatic ring. The term "heteroatom" includes oxygen, sulphur, silicon or nitrogen atoms. Where the alkyl chain is interposed by a nitrogen atom, it will be substituted so as to form a secondary or tertiary amine. Similarly, silicons will be substituted appropriately, for example with two alkoxy groups.

Particularly suitable monomeric organic compounds are those of formula (VII) 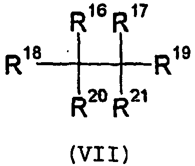 where R¹⁶, R¹⁷, R¹⁸, R¹⁹ and R²⁰ are independently selected from hydrogen, halogen, alkyl, haloalkyl or aryl optionally substituted by halo; and R²¹ is a group X-R²² where R²² is an alkyl or haloalkyl group and X is a bond; a group of formula - C(O)O(CH₂)ₓY- where x is an integer of from 1 to 10 and Y is a bond or a sulphonamide group; or a group -(O)ₚR²³(O)ₛ(CH₂)ₜ-where R²³ is aryl optionally substituted by halo, p is 0 or 1, s is 0 or 1 and t is 0 or an integer of from 1 to 10, provided that where s is 1, t is other than 0.

Suitable haloalkyl groups for R¹⁶, R¹⁷, R¹⁸, R¹⁹, and R²⁰ are fluoroalkyl groups. The alkyl chains may be straight or branched and may include cyclic moieties and have, for example from 1 to 6 carbon atoms.

For R²², the alkyl chains suitably comprise 1 or more carbon atoms, suitably from 1-20 carbon atoms and preferably from 6 to 12 carbon atoms.

Preferably R²² is a haloalkyl, and more preferably a perhaloalkyl group, particularly a perfluoroalkyl group of formula C_{z}F_{2z+1} where z is an integer of 1 or more, suitably from 1-20, and preferably from 6-12 such as 8 or 10.

Where X is a group -C(O)O(CH₂)_{y}Y-, y is an integer which provides a suitable spacer group. In particular, y is from 1 to 5, preferably about 2.

Suitable sulphonamide groups for Y include those of formula - N(R²³)SO₂⁻ where R²³ is hydrogen, alkyl or haloalkyl such as C₁₋₄alkyl, in particular methyl or ethyl.

The monomeric compounds used in the method of the invention preferably comprises a C₆₋₂₅ alkane optionally substituted by halogen, in particular a perhaloalkane, and especially a perfluoroalkane.

In yet a further alternative, item is exposed to plasma comprising an optionally substituted alkyne for a sufficient period of time to allow a polymeric layer to form on the surface.

Suitably the alkyne compounds used in the method of the invention comprise chains of carbon atoms, including one or more carbon-carbon triple bonds. The chains may be optionally interposed with a heteroatom and may carry substituents including rings and other functional groups. Suitable chains, which may be straight or branched, have from 2 to 50 carbon atoms, more suitably from 6 to 18 carbon atoms. They may be present either in the monomer used as a starting material, or may be created in the monomer on application of the plasma, for example by the ring opening

Particularly suitable monomeric organic compounds are those of formula (VIII)

R²⁴-C≡C-X¹-R²⁵ (VIII)

where R²⁴ is hydrogen, alkyl, cycloalkyl, haloalkyl or aryl optionally substituted by halo;
X¹ is a bond or a bridging group; and
R²⁵ is an alkyl, cycloalkyl or aryl group optionally substituted by halogen.

Suitable bridging groups X¹ include groups of formulae -(CH₂)ₛ, -CO₂(CH₂)ₚ-, -(CH₂)ₚO(CH₂)_{q}-, -(CH₂)ₚN(R²⁶)CH₂)_{q}-, -(CH₂)ₚN(R²⁶)SO₂-, where s is 0 or an integer of from 1 to 20, p and q are independently selected from integers of from 1 to 20; and R²⁶ is hydrogen, alkyl, cycloalkyl or aryl. Particular alkyl groups for R²⁶ include C₁₋₆ alkyl, in particular, methyl or ethyl.

Where R²⁴ is alkyl or haloalkyl, it is generally preferred to have from 1 to 6 carbon atoms.

Suitable haloalkyl groups for R²⁴ include fluoroalkyl groups. The alkyl chains may be straight or branched and may include cyclic moieties. Preferably however R²⁴ is hydrogen.

Preferably R²⁵ is a haloalkyl, and more preferably a perhaloalkyl group, particularly a perfluoroalkyl group of formula CᵣF₂ᵣ₊₁ where r is an integer of 1 or more, suitably from 1-20, and preferably from 6-12 such as 8 or 10.

In a preferred embodiment, the compound of formula (VIII) is a compound of formula (IX)

CH≡C (CH₂)ₛ-R²⁷ (IX)

where s is as defined above and R²⁷ is haloalkyl, in particular a perhaloalkyl such as a C₆₋₁₂ perfluoro group like C₆F₁₃.

In an alternative preferred embodiment, the compound of formula (VIII) is a compound of formula (X)

CH≡C(O)O(CH₂)ₚR²⁷ (X)

where p is an integer of from 1 to 20, and R²⁷ is as defined above in relation to formula (IX) above, in particular, a group C₈F₁₇. Preferably in this case, p is an integer of from 1 to 6, most preferably about 2.

Other examples of compounds of formula (I) are compounds of formula (XI)

CH≡(CH₂)ₚO(CH₂)_{q}R27, (XI)

where p is as defined above, but in particular is 1, q is as defined above but in particular is 1, and R²⁷ is as defined in relation to formula (IX), in particular a group C₆F₁₃;
or compounds of formula (XII)

CH≡C(CH₂)ₚN(R²⁶) (CH₂)_{q} R²⁷ (XII)

where p is as defined above, but in particular is 1, q is as defined above but in particular is 1, R²⁶ is as defined above an in particular is hydrogen, and R²⁷ is as defined in relation to formula (IX), in particular a group C₇F₁₅;
or compounds of formula (XIII)

CH≡C (CH₂) ₚN (R²⁶) SO₂R²⁷ (XIII)

where p is as defined above, but in particular is 1,R²⁶ is as defined above an in particular is ethyl, and R²⁷ is as defined in relation to formula (IX), in particular a group C₈F₁₇.

In an alternative embodiment, the alkyne monomer used in the process is a compound of formula (XIV)

R²⁸C≡C (CH₂) ₙ SiR²⁹R³⁰R³¹ (XIV)

where R²⁸ is hydrogen, alkyl, cycloalkyl, haloalkyl or aryl optionally substituted by halo, R²⁹, R³⁰ and R³¹ are independently selected from alkyl or alkoxy, in particular C₁₋₆ alkyl or alkoxy.

Preferred groups R²⁸ are hydrogen or alkyl, in particular C₁₋₆ alkyl.

Preferred groups R²⁹, R³⁰ and R³¹ are C₁₋₆ alkoxy in particular ethoxy.

Precise conditions under which the plasma polymerization takes place in an effective manner will vary depending upon factors such as the nature of the polymer, the item being treated and so on and will be determined using routine methods known in the art.

Suitable plasmas for use in the method of the invention include non-equilibrium plasmas such as those generated by radiofrequencies (RF), microwaves or direct current (DC). They may operate at atmospheric or sub-atmospheric pressures as are known in the art. In particular however, they are generated by radiofrequencies (RF).

Various forms of equipment may be used to generate gaseous plasmas. Generally these comprise containers or plasma chambers in which plasmas may be generated. Particular examples of such equipment are described for instance in WO2005/089961 and WO02/28548, but many other conventional plasma generating apparatus are available.

In the method, in general, the substrate to be treated is placed within a plasma chamber together with one or more monomers, which are able to generate the target polymeric substance, in an essentially gaseous state, a glow discharge is ignited within the chamber and a suitable voltage, which may preferably be pulsed, is applied.

As used herein, the expression "in an essentially gaseous state" refers to gases or vapours, either alone or in mixture, as well as aerosols.

The gas present within the plasma chamber may comprise a vapour of the monomeric compound alone, but it may be combined with a carrier gas, in particular, an inert gas such as helium or argon. In particular helium is a preferred carrier gas, if a carrier is required, as this can minimise fragmentation of the monomer.

When used as a mixture, the relative amounts of the monomer vapour to carrier gas is suitably determined in accordance with procedures which are conventional in the art. The amount of monomer added will depend to some extent on the nature of the particular monomer being used, the nature of the substrate, the size of the plasma chamber and so forth. Generally, in the case of conventional chambers, monomer is delivered in an amount of from 50-1000mg/minute, for example at a rate of from 10-150mg/minute. It will be appreciated, however, that the rate will very much depends on the reactor size chosen and the number of substrates required to be processed at once; this inturn depends on considerations such as the annual through-put required and the capital out-lay. Carrier gas such as helium is suitably administered at a constant rate for example at a rate of from 5-90 standard cubic centimetres per minute (sccm), for example from 15-30sccm. In some instances, the ratio of monomer to carrier gas will be in the range of from 100:0 to 1:100, for instance in the range of from 10:0 to 1:100, and in particular about 1:0 to 1:10. The precise ratio selected will be so as to ensure that the flow rate required by the process is achieved.

In some cases, a preliminary continuous power plasma may be struck for example for from 15 seconds to10 minutes within the chamber. This may act as a surface pre-treatment or activation step, ensuring that the monomer attaches itself readily to the surface, so that as polymerisation occurs, the deposition "grows" on the surface. The pre-treatment step may be conducted before monomer is introduced into the chamber, in the presence of only an inert gas.

The plasma is then suitably switched to a pulsed plasma to allow polymerisation to proceed, at least when the monomer is present.

In all cases, a glow discharge is suitably ignited by applying a high frequency voltage, for example at 13.56MHz. This is applied using electrodes, which may be internal or external to the chamber, generally used for large and small chambers respectively.

Suitably the gas, vapour or gas mixture is supplied at a rate of at least 1 standard cubic centimetre per minute (sccm) and preferably in the range of from 1 to 100sccm.

In the case of the monomer vapour, this is suitably supplied at a rate of from 80-100mg/minute whilst the continuous or pulsed voltage is applied. It may, however, be more appropriate for industrial scale use to have a fixed total monomer delivery that will vary with respect to the defined process time and will also depend upon the nature of the monomer and the technical effect required.

Gases or vapours may be drawn or pumped into the plasma region. In particular, where a plasma chamber is used, gases or vapours may be drawn into the chamber as a result of a reduction in the pressure within the chamber, caused by use of an evacuating pump. Alternatively, they may be pumped or injected into the chamber or delivered by any other known means for delivering a liquid or vapour to a vessel.

Polymerisation is suitably effected using vapours of compounds of formula (I), which are maintained at pressures of from 0.1 to 400mtorr. It will be appreciated that the pressure chosen in any given case will depend on the type of shoe to be processed as the degree of solvents and or adhesives used will effect the out-gassing rate and hence the pressure at which the process occurs at.

The applied fields are suitably of power of from 5 to 500W, suitably at about 10 - 200 W peak power, applied as a continuous or pulsed field. If pulses are required, they can be applied in a sequence which yields very low average powers, for example in a sequence in which the ratio of the time on : time off is in the range of from 1:500 to 1:1500. Particular examples of such sequence are sequences where power is on for 20-50µs, for example about 30µs, and off for from 1000µs to 30000µs, in particular about 20000µs. Typical average powers obtained in this way are 0.01W.

The total RF power required for the processing of a batch of shoes is suitably applied from 30 seconds to 90 minutes, preferably from 1 minute to 10 minutes, depending upon the nature of the compound of formula (I) and the type and number of items being enhanced in the batch.

Suitably a plasma chamber used is of sufficient volume to maximise the annual through-put and so the size and number of an individual chamber and the number of items such as shoes that can be processed in a batch cycle will depend on numerous factors such as, but not limited to, (a) annual production volumes, (b) operating hours per day and annual operating days, (c) factory operating efficiency, (d) capital cost of equipment, (e) size of footwear and materials used.

The dimensions of the chamber will be selected so as to accommodate the particular items being treated. For instance, generally cylindrical chambers may be suitable for a wide range of applications, but if necessary, elongate or rectangular chambers may be constructed or indeed cuboid, or of any other suitable shape.

The chamber may be a sealable container, to allow for batch processes, or it may comprise inlets and outlets for the items, to allow it to be utilised in a semi-continuous process. In particular in the latter case, the pressure conditions necessary for creating a plasma discharge within the chamber are maintained using high volume pumps, as is conventional for example in a device with a "whistling leak". However it will also be possible to process items of footwear at atmospheric pressure, or close to, negating the need for "whistling leaks"

The applied fields are suitably of power of from 20 to 500W, suitably at about 100W peak power, applied as a pulsed field. The pulses are applied in a sequence which yields very low average powers, for example in a sequence in which the ratio of the time on : time off is in the range of from 1:3 to 1:1500, depending upon the nature of the monomer gas employed. Although for monomers which may be difficult to polymerise, time on : time off ranges may be at the lower end of this range, for example from 1:3 to 1:5, many polmerisations can take place with a time on:time off range of 1:500 to 1:1500. Particular examples of such sequence are sequences where power is on for 20-50µs, for example about 30µs, and off for from 1000µs to 30000µs, in particular about 20000µs. Typical average powers obtained in this way are 0.01W.

The fields are suitably applied from 30 seconds to 90 minutes, preferably from 5 to 60 minutes, depending upon the nature of the monomer and the substrate, and the nature of the target coating required.

Suitable plasmas for use in the method of the invention include non-equilibrium plasmas such as those generated by radiofrequencies (RF), microwaves or direct current (DC). They may operate at atmospheric or sub-atmospheric pressures as are known in the art. In particular however, they are generated by radiofrequencies (RF).

In all cases, a glow discharge is suitably ignited by applying a high frequency voltage, for example at 13.56MHz. This is applied using electrodes, which may be internal or external to the chamber, but in the case of larger chambers are internal.

Suitably the gas, vapour or gas mixture is supplied at a rate of at least 1 standard cubic centimetre per minute (sccm) and preferably in the range of from 1 to 100sccm.

In the case of the monomer vapour, this is suitably supplied at a rate of from 80-300mg/minute, for example at about 120mg per minute depending upon the nature of the monomer, whilst the pulsed voltage is applied.

Gases or vapours may be drawn or pumped into the plasma region. In particular, where a plasma chamber is used, gases or vapours may be drawn into the chamber as a result of a reduction in the pressure within the chamber, caused by use of an evacuating pump, or they may be pumped, sprayed, dripped, electrostatically ionised or injected into the chamber as is common in liquid handling.

Polymerisation is suitably effected using vapours of monomers which are maintained at pressures of from 0.1 to 400mtorr, suitably at about 10-100mtorr.

Precise conditions under which the plasma polymerization takes place in an effective manner will vary depending upon factors such as the nature of the polymer being deposited, as well as the nature of the substrate and will be determined using routine methods and/or other techniques.

The dimensions of the chamber will be selected so as to accommodate the particular substrate or device being treated. The chamber may be a sealable container, to allow for batch processes, or it may comprise inlets and outlets for the substrates, to allow it to be utilised in a continuous process as an in-line system. In particular in the latter case, the pressure conditions necessary for creating a plasma discharge within the chamber are maintained using high volume pumps, as is conventional for example in a device with a "whistling leak". However it will also be possible to process drug delivery systems at atmospheric pressure, or close to, negating the need for "whistling leaks".

The hydrophobicity of the treated shoe may be assessed using tests conventional in the art, such as the test method AATCC 193/2005 (American Association of Textile Colourists and Chemists).

The invention will now be particularly described by way of example with reference to the accompanying figures in which:-
Figures 1 and 2 show graphically the extent of water uptake over time for various commercially available sports shoes which have been protected by plasma processing (shaded) compared to their untreated (unshaded) counterparts;
Figures 3 to 5 show graphically the enhanced durability when exposed to water of various commercially available sports shoes which have been protected by plasma processing.

### Example 1

A Victory branded shoe (with the footbed removed) was placed into a glass chamber tube of approximately 13 litres in volume with an externally wound copper coil electrode and evacuated for one minute using a Leybold screwline SP630 and a Leybold Roots blower 2001WSU pumpstack. After pumping for one minute, a continuous wave plasma was struck at 50 W for for 30 seconds using a Dressler 'Cesar 1310' radio frequency generator and a home made matching network so as to activate the surface of the footwear. Following this a perfluorinated acrylate monomer was introduced into the chamber via a monomer tube under pulsed plasma conditions of 20 microseconds on-time, 20 milliseconds off time at a peak power of 50 W for a period of 5 minutes. After this time the RF supply was turned off, as was the monomer source and the system vented to air, following which the shoe was removed.

Initial assessment to determine the hydrophobicity of the shoe is carried out by placing droplets of water (or mixes of isopropyl alcohol) onto the shoe and assessing the degree of repellency by both run-off and wetting / wicking according to the test AATCC 193/2005 (American Association of Textile Colourists and Chemists). The shoe has a water rating of w6 according to this test method. The 'breathability' of the treated shoe compared to a corresponding untreated shoe can then be assessed by weighing the shoe before and after exposure to standard conditions simulating the human foot at a high stress level (34°C and 5ml/hr sweat rate) using the SATRA Advanced Moisture Management Test (SATRA TMV376).

### Example 2

The extent of water penetration for various commercially available sports shoes treated according to the method of Example 1 was determined according to the test method of EN ISO 20344:2004 (E). In this test, which is an internationally recognised test for safety footwear (often referred to as the "car wash " test) the item of footwear in a defined depth of water is subjected to the mechanical action of rotating wetted brushes and at the end of each programmed test period the extent of water penetration is determined by examination.

The tests were repeated using the corresponding untreated sports shoes to enable the water uptake over time for treated and untreated shoes to be compared.

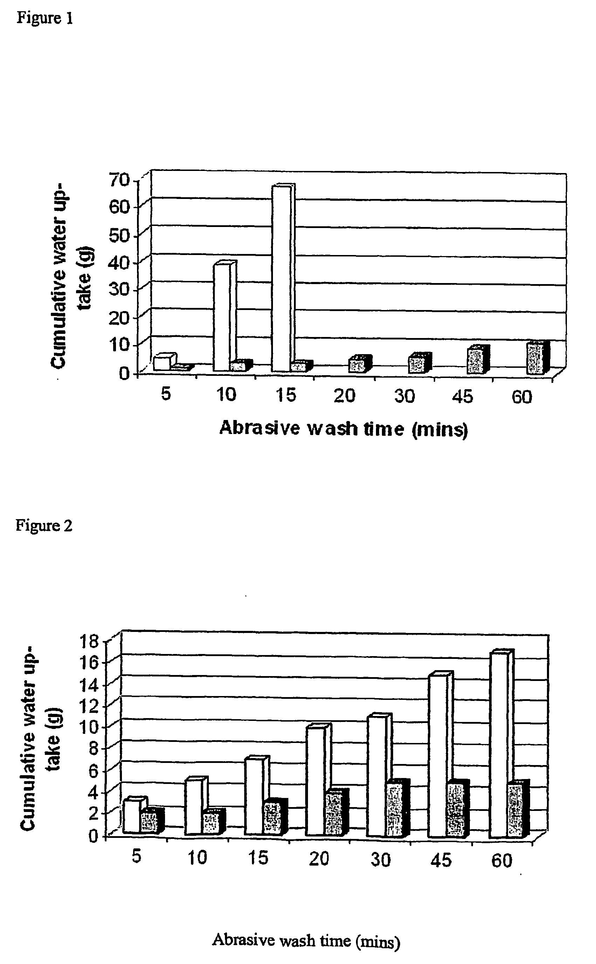

The results obtained for commercially available sports shoes New Balance 1091 and Pearl Izumi are presented graphically in Figures 1 and 2 respectively. From these results it can be seen that the treated shoes (shaded) take up considerably less water than their untreated counterparts, leading to significantly less weight gain.

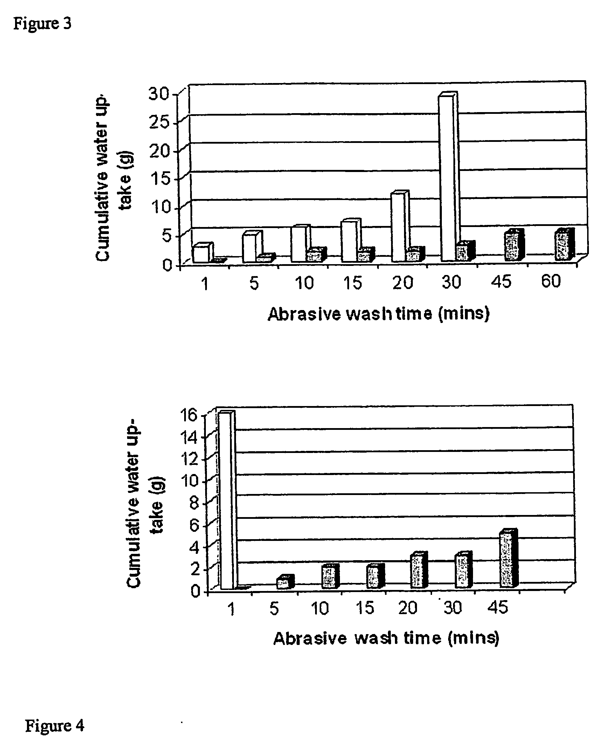

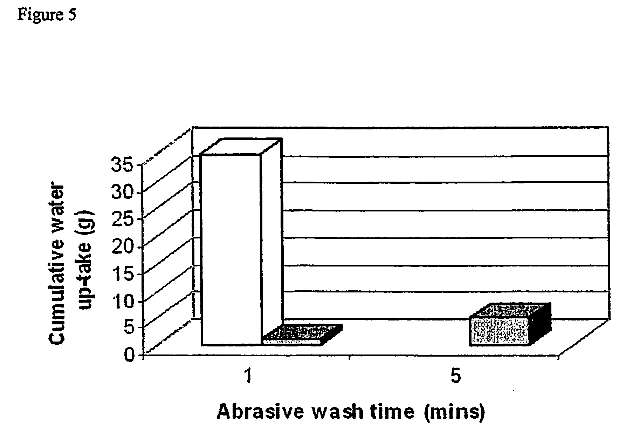

Figures 3 to 5 present the results obtained in this test for Adidas Supernova GCS GTX (XCR), Asics Gel Yama and Brooks Adrenaline sports shoes demonstrating the water uptake of the shoe until break-through occurs. In all three cases it can be seen that water break through occurs considerably sooner for untreated compared to treated shoes.

## Claims

1. A method for protecting an item of footwear from weight gain due to uptake of liquid comprising exposing said complete item including fasteners to plasma in a gaseous state for a sufficient period of time to allow a protective layer to be created on the surface of the item.

2. A method according to claim 1, wherein the fasteners are selected from laces and zips.

3. A method according to claim 1 or claim 2 wherein the item comprises sports shoes.

4. A method according to any preceding claim, wherein the protective layer is a polymeric layer which is created by exposing the item to a pulsed plasma comprising a compound of formula (I) 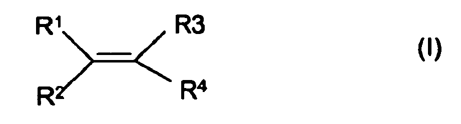 where R¹, R² and R³ are independently selected from hydrogen, alkyl, haloalkyl or aryl optionally substituted by halo; and R⁴ is a group X-R⁵ where R⁵ is an alkyl or haloalkyl group and X is a bond; a group of formula -C(O)O-, -C(O)O(CH₂)ₙY- where n is an integer of from 1 to 10 and Y is a bond or a sulphonamide group; or a group -(O)ₚR⁶(O)_{q}(CH₂)ₜ- where R⁶ is aryl optionally substituted by halo, p is 0 or 1, q is 0 or 1 and t is 0 or an integer of from 1 to 10, provided that where q is 1, t is other than 0, for a sufficient period of time to allow a protective polymeric layer to be created on the surface of the item.

5. A method according to any preceding claim wherein the item is exposed to pulsed plasma within a plasma deposition chamber.

6. An method according to claim 4 or claim 5, wherein the compound of formula (I) is a compound of formula (II)
CH₂=CH-R⁵ (II)
where R⁵ is as defined in claim 4 or a compound of formula (III)
CH₂=CR⁷C(O)O(CH₂)ₙR⁵ (III)
wherein n and R⁵ as defined in claim 4 and R⁷ is hydrogen, C₁₋₁₀ alkyl, or C₁₋₁₀haloalkyl.

7. A method according to claim 6 wherein the compound of formula (III) is a compound of formula (IV) 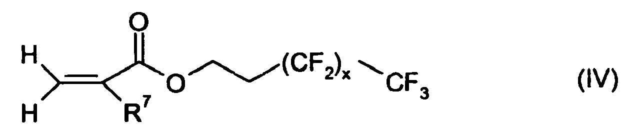 where R⁷ is as defined in claim 6 and x is an integer of from 1 to 9.

8. A method according to claim 7 wherein the compound of formula (IV) is 1H,1H,2H,2H-heptadecafluorodecylacrylate.

9. A method according to any of claims 1 to 3, wherein the protective layer is a polymeric layer which is created by exposing the item to plasma comprising a compound of formula (V) 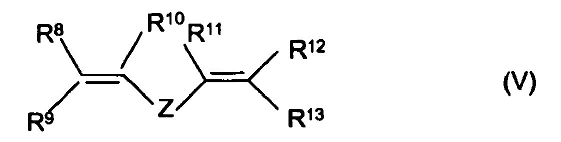 where R⁸, R⁹, R¹⁰, R¹¹, R¹², and R¹³ are all independently selected from hydrogen, halo, alkyl, haloalkyl or aryl optionally substituted by halo; and Z is a bridging group.

10. A method according to any of claims 1 to 3, wherein the protective layer is a polymeric layer which is created by exposing the item to plasma comprising a compound of formula (VII) 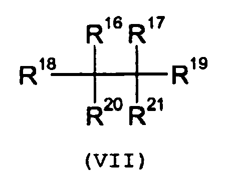 where R¹⁶, R¹⁷ , R¹⁸, R¹⁹ and R²⁰ are independently selected from hydrogen, halogen, alkyl, haloalkyl or aryl optionally substituted by halo; and R²¹ is a group X-R²² where R²² is an alkyl or haloalkyl group and X is a bond; a group of formula - C(O)O(CH₂)ₓY- where x is an integer of from 1 to 10 and Y is a bond or a sulphonamide group; or a group -(O)ₚR²³(O)ₛ(CH₂)ₜ-where R²³ is aryl optionally substituted by halo, p is 0 or 1, s is 0 or 1 and t is 0 or an integer of from 1 to 10, provided that where s is 1, t is other than 0.

11. A method according to any of claims 1 to 3, wherein the protective layer is a polymeric layer which is created by exposing the item to plasma comprising a compound of formula (VIII)
R²⁴-C≡C-X¹-R²⁵ (VIII)
where _{R}²⁴ is hydrogen, alkyl, cycloalkyl, haloalkyl or aryl optionally substituted by halo;
X¹ is a bond or a bridging group; and
R²⁵ is an alkyl, cycloalkyl or aryl group optionally substituted by halogen.

12. A method according to any preceding claim, wherein the item to be treated is placed within a plasma chamber together with one or more monomers, which are able to generate the target polymeric substance, in an essentially gaseous state, a glow discharge is ignited within the chamber and a suitable pulsed voltage is applied

13. A method according to claim 12, wherein pulses are applied in a sequence in which the ratio of the time on : time off is in the range of from 1:500 to 1:1500.

14. Use of a plasma polymerisation deposition process for the deposition of a liquid repellent coating on a complete item of footwear including fasteners to protect said item from weight gain due to uptake of liquid.

15. An item of footwear treated by a method according to any of claims 1 to 13.

## Patentansprüche

1. Verfahren zum Schutz eines Schuhwerkartikels vor Gewichtszunahme durch Flüssigkeitsaufnahme, welches umfasst, den gesamten Artikel einschließlich Verschlussmitteln Plasma in einem gasförmigen Zustand einen ausreichenden Zeitraum auszusetzen, um die Erzeugung einer Schutzschicht auf der Oberfläche des Artikels zu ermöglichen.

2. Verfahren nach Anspruch 1, bei dem die Verschlussmittel aus Schnürsenkeln und Reißverschlüssen ausgewählt sind.

3. Verfahren nach Anspruch 1 oder Anspruch 2, bei dem der Artikel Sportschuhe umfasst.

4. Verfahren nach irgendeinem vorhergehenden Anspruch, bei dem die Schutzschicht eine Polymerschicht ist, die dadurch erzeugt wird, dass der Artikel einem gepulsten Plasma, das eine Verbindung der Formel (I) 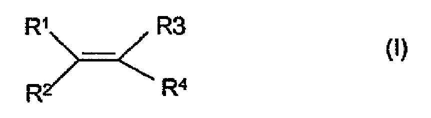 umfasst, wobei R¹, R² und R³ unabhängig voneinander aus Wasserstoff, Alkyl, Haloalkyl oder Aryl, gegebenenfalls halosubstituiert, ausgewählt sind; und R⁴ ist: eine Gruppe X-R⁵, wobei R⁵ eine Alkyl- oder Haloalkylgruppe ist und X eine Bindung ist; eine Gruppe der Formel -C(O)O-, -C(O)O(CH₂)ₙY-, wobei n eine ganze Zahl von 1 bis 10 ist und Y eine Bindung oder eine Sulfonamidgruppe ist; oder eine Gruppe -(O)ₚR⁶(O)_{q}(CH₂)ₜ-, wobei R⁶ Aryl, gegebenenfalls halosubstituiert, ist, p 0 oder 1 ist, q 0 oder 1 ist und t 0 oder eine ganze Zahl von 1 bis 10 ist, mit der Maßgabe dass, wenn q 1 ist, t nicht 0 ist, einen ausreichenden Zeitraum ausgesetzt wird, um die Erzeugung einer schützenden Polymerschicht auf der Oberfläche des Artikels zu ermöglichen.

5. Verfahren nach irgendeinem vorhergehenden Anspruch, bei dem der Artikel gepulstem Plasma in einer Plasmaabscheidungskammer ausgesetzt wird.

6. Verfahren nach Anspruch 4 oder Anspruch 5, bei dem die Verbindung der Formel (I) eine Verbindung der Formel (II)
CH₂=CH-R⁵ (II)
ist, wobei R⁵ wie in Anspruch 4 definiert oder eine Verbindung der Formel (III)
CH₂=CR⁷C(O)O(CH₂)ₙR⁵ (III)
ist, wobei n und R⁵ wie in Anspruch 4 definiert sind und R⁷ Wasserstoff, C₁₋₁₀-Alkyl oder C₁₋₁₀-Haloalkyl ist.

7. Verfahren nach Anspruch 6, bei dem die Verbindung der Formel (III) eine Verbindung der Formel (IV) 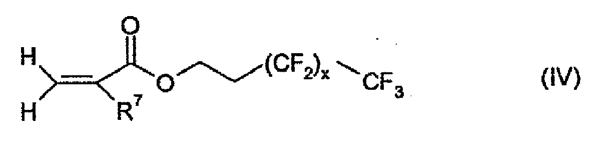 ist, wobei R⁷ wie in Anspruch 6 definiert ist und x eine ganze Zahl von 1 bis 9 ist.

8. Verfahren nach Anspruch 7, bei dem die Verbindung der Formel (IV) 1H, 1H, 2H, 2H-Heptadecafluordecylacrylat ist.

9. Verfahren nach irgendeinem der Ansprüche 1 bis 3, bei dem die Schutzschicht eine Polymerschicht ist, die dadurch erzeugt wird, dass der Artikel Plasma ausgesetzt wird, das eine Verbindung der Formel (V) 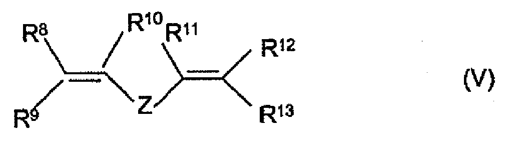 umfasst, wobei R⁸, R⁹, R¹⁰, R¹¹, B¹² und R¹³ sämtlich unabhängig voneinander aus Wasserstoff, Halo, Alkyl, Haloalkyl oder Aryl, gegebenenfalls halosubstituiert, ausgewählt sind; und Z eine Brückengruppe ist.

10. Verfahren nach 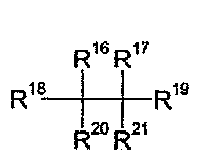 irgendeinem der Ansprüche 1 bis 3, bei dem die Schutzschicht eine Polymerschicht ist, die dadurch erzeugt wird, dass der Artikel Plasma ausgesetzt wird, das eine Verbindung der Formel (VII)
umfasst, wobei R¹⁶, R¹⁷, R¹⁸, R¹⁹ und R²⁰ unabhängig voneinander aus Wasserstoff, Halogen, Alkyl, Haloalkyl oder Aryl, gegebenenfalls halosubstituiert, ausgewählt sind; und R²¹ ist: eine Gruppe X-R²², wobei R²² eine Alkyl- oder Haloalkylgruppe ist und X eine Bindung ist; eine Gruppe der Formel -C(O)O(CH₂)ₓY-, wobei x eine ganze Zahl von 1 bis 10 ist und Y eine Bindung oder eine Sulfonamidgruppe ist; oder eine Gruppe -(O)ₚR²³(O)S(CH₂)ₜ-, wobei R²³ Aryl, gegebenenfalls halosubstituiert, ist, p 0 oder 1 ist, s 0 oder 1 ist und t 0 oder eine ganze Zahl von 1 bis 10 ist, mit der Maßgabe, dass, wenn s 1 ist, t nicht 0 ist.

11. Verfahren nach irgendeinem der Ansprüche 1 bis 3, bei dem die Schutzschicht eine Polymerschicht ist, die dadurch erzeugt wird, dass der Artikel Plasma ausgesetzt wird, das eine Verbindung der Formel (VIII)
R²⁴-C≡C-X¹⁻R²⁵ (VIII)
umfasst, wobei R²⁴ Wasserstoff, Alkyl, Cycloalkyl, Haloalkyl oder Aryl, gegebenenfalls halosubstituiert, ist;
X¹ eine Bindung oder eine Brückengruppe ist; und
R²⁵ eine Alkyl-, Cycloalkyl- oder Arylgruppe, gegebenenfalls halogensubstituiert, ist.

12. Verfahren nach irgendeinem vorhergehenden Anspruch, bei dem der zu behandelnde Gegenstand zusammen mit einem oder mehreren Monomeren, die imstande sind, die polymere Zielsubstanz zu bilden, in einem im Wesentlichen gasförmigen Zustand, in einer Plasmakammer angeordnet wird, in der Kammer eine Glimmentladung gezündet wird und eine geeignete gepulste Spannung angelegt wird.

13. Verfahren nach Anspruch 12, bei dem Pulse in einer Sequenz angelegt werden, bei der das Verhältnis von Einschaltdauer : Ausschaltdauer im Bereich von 1:500 bis 1:1500 liegt.

14. Verwendung eines Plasmapolymerisationsabscheidungsverfahrens zur Abscheidung eines flüssigkeitsabweisenden Überzugs auf einem vollständigen Schuhwerkartikel einschließlich Verschlussmitteln, um diesen Artikel vor einer Gewichtszunahme durch Flüssigkeitsaufnahme zu schützen.

15. Schuhwerkartikel, der mit einem Verfahren nach irgendeinem der Ansprüche 1 bis 13 behandelt wurde.

## Revendications

1. Procédé pour protéger un article chaussant de tout alourdissement dû à l'absorption de liquide comprenant l'exposition dudit article complet, y compris de ses fixations, à du plasma à l'état gazeux sur une période suffisante pour permettre la création d'une couche protectrice à la surface de l'article.

2. Procédé selon la revendication 1, dans lequel les fixations sont choisies parmi des lacets et des fermetures à glissière.

3. Procédé selon la revendication 1 ou la revendication 2, dans lequel l'article comprend des chaussures de sport.

4. Procédé selon l'une quelconque des revendications précédentes, dans lequel la couche protectrice est une couche polymère qui est créée en exposant l'article à un plasma pulsé comprenant un composé de formule (I) : 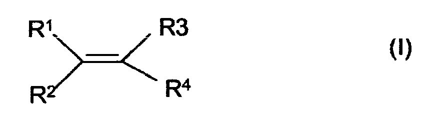 dans laquelle R¹, R² et R³ sont indépendamment choisis parmi l'hydrogène, un groupe alkyle, halogénoalkyle ou aryle éventuellement substitué par un halogène ; et R^{4 4} est un groupe X-R⁵ dans lequel R⁵ est un groupe alkyle ou halogénoalkyle et X est une liaison ; un groupe de formule -C(O)O-, -C(O)O(CH₂)ₙY- dans laquelle n est un entier de 1 à 10 et Y est une liaison ou un groupe sulfonamide ; ou un groupe -(O)ₚR⁶(O)_{q}(CH₂)ₜ- dans lequel R⁶ est un groupe aryle éventuellement substitué par un halogène, p vaut 0 ou 1, q vaut 0 ou 1 et t vaut 0 ou un entier de 1 à 10, à condition que, lorsque q vaut 1, t soit non nul, pendant une période suffisante pour permettre la création d'une couche polymère protectrice à la surface de l'article.

5. Procédé selon l'une quelconque des revendications précédentes, dans lequel l'article est exposé à un plasma pulsé à l'intérieur d'une chambre de dépôt par plasma.

6. Procédé selon la revendication 4 ou la revendication 5, dans lequel le composé de formule (I) est un composé de formule (II) :
CH₂=CH-R⁵ (II)
dans laquelle R⁵ est tel que défini dans la revendication 4 ou un composé de formule (III) :
CH₂=CR⁷C (O) O (CH₂)ₙR⁵ (III)
dans laquelle n et R⁵ sont tels que définis dans la revendication 4 et R⁷ est l'hydrogène, un groupe alkyle en C₁-C₁₀ ou un groupe halogénoalkyle en C₁-C₁₀.

7. Procédé selon la revendication 6, dans lequel le composé de formule (III) est un composé de formule (IV) : 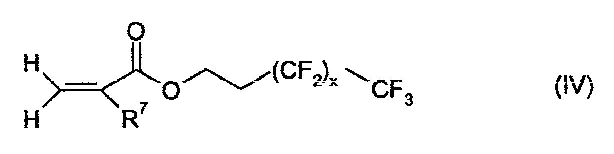 dans laquelle R⁷ est tel que défini dans la revendication 6 et x est un entier de 1 à 9.

8. Procédé selon la revendication 7, dans lequel le composé de formule (IV) est le 1H,1H,2H,2H-heptadécafluorodécylacrylate.

9. Procédé selon l'une quelconque des revendications 1 à 3, dans lequel la couche protectrice est une couche polymère qui est créée en exposant l'article à un plasma comprenant un composé de formule (V) : 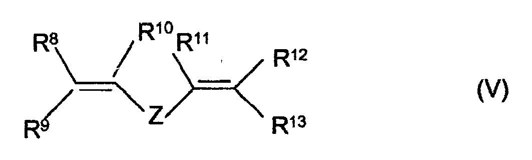 dans laquelle R⁸, R⁹, R¹⁰, R¹¹, R¹² et R¹³ sont tous indépendamment choisis parmi l'hydrogène, un groupe halogéno, alkyle, halogénoalkyle ou aryle éventuellement substitué par un halogène ; et Z est un groupe de pontage.

10. Procédé selon l'une quelconque des revendications 1 à 3, dans lequel la couche protectrice est une couche polymère qui est créée en exposant l'article à un plasma comprenant un composé de formule (VII) : 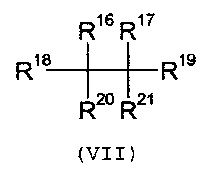 dans laquelle R¹⁶, R¹⁷, R¹⁸, R¹⁹ et R²⁰ sont indépendamment choisis parmi l'hydrogène, un halogène, un groupe alkyle, halogénoalkyle ou aryle éventuellement substitué par un halogène ; et R²¹ est un groupe X-R²² dans lequel R²² est un groupe alkyle ou halogénoalkyle et X est une liaison ; un groupe de formule -C(O)O(CH₂)ₓY- dans laquelle x est un entier de 1 à 10 et Y est une liaison ou un groupe sulfonamide ; ou un groupe - (O) ₚR²³ (O) ₛ (CH₂) ₜ- dans lequel R²³ est un groupe aryle éventuellement substitué par un halogène, p vaut 0 ou 1, s vaut 0 ou 1 et t vaut 0 ou un entier de 1 à 10, à condition que, lorsque s vaut 1, t soit non nul.

11. Procédé selon l'une quelconque des revendications 1 à 3, dans lequel la couche protectrice est une couche polymère qui est créée en exposant l'article à un plasma comprenant un composé de formule (VIII) :
R²⁴-C≡C-X¹-R²⁵ (VIII)
dans laquelle R²⁴ est l'hydrogène, un groupe alkyle, cycloalkyle, halogénoalkyle ou aryle éventuellement substitué par un halogène ;
X¹ est une liaison ou un groupe de pontage ; et
R²⁵ est un groupe alkyle, cycloalkyle ou aryle éventuellement substitué par un halogène.

12. Procédé selon l'une quelconque des revendications précédentes, dans lequel l'article à traiter est placé à l'intérieur d'une chambre à plasma conjointement avec un ou plusieurs monomères qui sont capables de générer la substance polymère cible, à l'état essentiellement gazeux, une décharge luminescente est amorcée dans la chambre et une tension pulsée adaptée est appliquée.

13. Procédé selon la revendication 12, dans lequel les impulsions sont appliquées selon une séquence dans laquelle le rapport temps activé/temps désactivé se situe dans la plage allant de 1/500 à 1/1500.

14. Utilisation d'un procédé de dépôt par polymérisation plasma pour déposer un revêtement hydrophobe sur l'ensemble d'un article chaussant, y compris sur ses fixations, afin de protéger ledit article de tout alourdissement dû à l'absorption de liquide.

15. Article chaussant traité avec le procédé selon l'une quelconque des revendications 1 à 13.
